# EUROPEAN PATENT APPLICATION

(11) **EP 2 110 962 A1**
(43) Date of publication of application: **21.10.2009**
(21) Application number: 08103599.0
(22) Date of filing: 17.04.2008
(51) Int. Cl.: H04B 7/04, H01Q 13/08, H01Q 9/16, H01Q 21/28, H01Q 1/24

(54) **Notch and rod antennas in sliding type portable radio communication device.**

(71) Applicant: Laird Technologies AB, 164 22 Kista (SE)
(72) Inventor: Nilsson, Jonas, 187 30 Täby (SE); El Banna, Benjamin, SE-170 66 Solna (SE); Rohde, Monty, Lincoln, NE 68512 (US); Ryno, Erik, SE-126 39 Hägerstein (SE)
(74) Representative: Fritzon, Rolf

(57) **Abstract**

The present invention relates to a portable radio communication device, such as a slider mobile phone, wherein an antenna device therein comprises a radiating element (5; 8) which is a piece of the portable radio communication device also having another function for the portable radio communication device.

## Description

### FIELD OF INVENTION

The present invention relates generally to antennas, and particularly to an antenna device in a portable radio communication device.

### BACKGROUND

The market for portable radio communication devices, such as mobile phones, PDA, portable computers and similar devices, is today very competitive, which puts tough demands on the manufacturers. Furthermore, antennas of such devices many times only have access to limited space of different shapes.

### SUMMARY OF THE INVENTION

An object of the present invention is thus to provide an antenna device in a portable radio communication device which efficiently utilizes available space therein.

This object, among others, is according to the present invention attained by an antenna device and a portable radio communication device, respectively, as defined by the appended claims.

By providing a portable radio communication device, comprising a first slider part and a second slider part and an antenna device, wherein the first slider part has an inner side facing the second slider part and an outer side facing away from the second slider part, the second slider part has an inner side facing the first slider part and an outer side facing away from the first slider part, and the first slider part and the second slider part are configured to be slidable parallel to each other and to be temporarily fixed positioned in a first closed position and a second open position, wherein the inner side of the first slider part is covered by the second slider part and the inner side of the second slider part is covered by the first slider part in the closed position and the inner side of the first slider part is partly covered by the second slider part and the inner side of the second slider part is partly covered by the first slider part in the open position, wherein the antenna device comprises a radiating element which is a piece of the portable radio communication device also having another function for the portable radio communication device, available space is efficiently utilized.

By preferably utilizing a decorative plate covering a major portion of the inner side that is revealed when the first slider part and the second slider are in the open position, as the radiating element, the antenna device is naturally protected in standby mode and displayed in active mode, which provides for improved antenna characteristics at the same time allowing a large area of the portable radio communication device to be used as radiating element.

The decorative plate is preferably provided with an open ended slot tuned to a predefined frequency band, to improve antenna characteristics. Also, by preferably providing a feeding point arranged on a first side of the slot, and a grounding point arranged on a second side of the slot opposite the feeding point, further improvement is achieved.

By preferably arranging the feeding and grounding points at a predefined distance from the end of the slot, matching of the radiating element is provided.

By preferably utilizing at least one slider rail, along which the first slider part and the second slider part slide between the open and closed positions, as the radiating element space is efficiently utilized.

A feeding point is preferably positioning on the slider rail in a predefined position to match the radiating element. The feeding point is preferably fed through a sliding spring loaded contact, or alternatively through a flexible cable connection.

The antenna characteristics is preferably boosted by configuring the radiating element to parasitically couple to a printed wiring board of at least one of the first slider part and the second slider part.

Further features and advantages of the present invention will be evident from the following description.

### BRIEF DESCRIPTION OF THE DRAWINGS

The present invention will become more fully understood from the detailed description of embodiments given below and the accompanying figures, which are given by way of illustration only, and thus, are not limitative of the present invention, wherein:
Fig. 1 illustrates a slider mobile phone in open position.
Fig. 2 shows a blown up portion of the slider mobile phone illustrated in Fig. 1.
Fig. 3 illustrates a slider mobile phone, with one slider part transparent.
Fig. 4 shows the slider mobile phone illustrated in Fig. 3 from behind.

### DETAILED DESCRIPTION OF EMBODIMENTS

In the following description, for purpose of explanation and not limitation, specific details are set forth, such as particular techniques and applications in order to provide a thorough understanding of the present invention. However, it will be apparent for a person skilled in the art that the present invention may be practiced in other embodiments that depart from these specific details. In other instances, detailed description of well-known methods and apparatuses are omitted so as not to obscure the description of the present invention with unnecessary details.

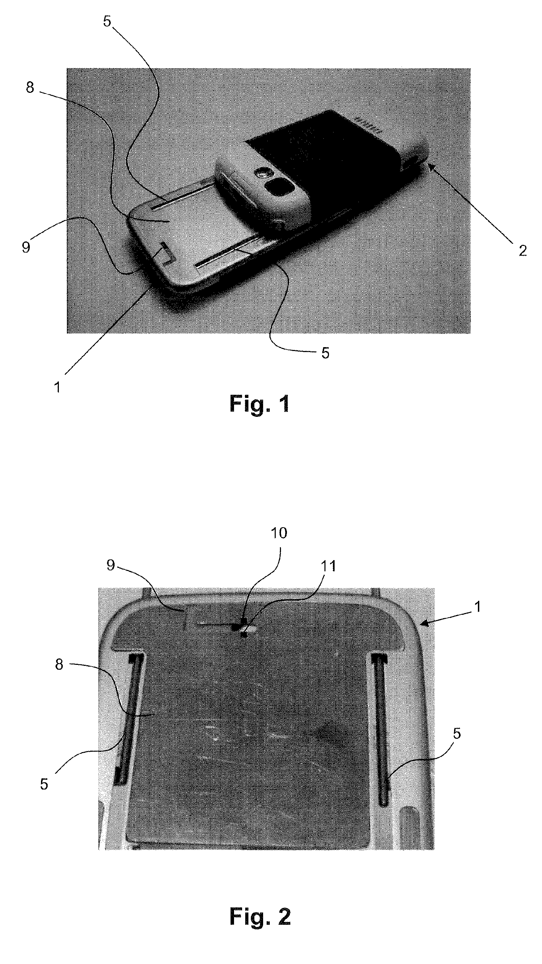

A portable radio communication device according to a first embodiment of the present invention will now be described with reference to Figs. 1-2.

The portable radio communication device comprises a first slider part 1 and a second slider part 2 and an antenna device. The first slider part 1 has an inner side facing the second slider part 2 and an outer side facing away from the second slider part 2, and correspondingly the second slider part 2 has an inner side facing the first slider part 1 and an outer side facing away from the first slider part 1. The first slider part 1 and the second slider part 2 are configured to be slidable parallel to each other and to be temporarily fixed positioned in a first closed position and a second open position, wherein the inner side of the first slider part 1 is covered by the second slider part 2 and the inner side of the second slider part 2 is covered by the first slider part 1 in the closed position and the inner side of the first slider part 1 is partly covered by the second slider part 2 and the inner side of the second slider part 2 is partly covered by the first slider part 1 in the open position.

For e.g. a slider mobile phone the first slider part 1 comprises a display and possibly a key pad, whereas the second slider part 2 comprises RF circuitry, processing capabilities, a possible camera, and alternatively the key pad.

The antenna device comprises a radiating element 8 which is a piece of the portable radio communication device also having another function for the portable radio communication device. At least one of the first slider part 1 and the second slider part 2 comprises a decorative plate 8 covering a major portion of the inner side that is revealed when the first slider part 1 and the second slider 2 are in the open position, which decorative plate 8 also is the radiating element 8. The most suitable position for the radiating element 8 is in the first slider part 1, since this part is facing away from a user speaking in the slider mobile phone, and further the second slider part 2 many times have a key pad, instead of a decorative plate, revealed in the open position.

The decorative plate 8 is provided with an open ended slot 9 tuned to a predefined frequency band or bands, such as BT, WLAN (2.4 GHz) and WiMax (3.5 GHz). A feeding point 10 is preferably arranged on a first side of the slot 9, and a grounding point 11 is preferably arranged on a second side of the slot 9 opposite the feeding point 10. Further, the feeding and grounding points 10, 11 are preferably arranged at a distance from the end of the slot 9, wherein the distance is selected to match the radiating element 8.

To boost the antenna functions, the radiating element 8 is preferably configured to parasitically couple to a printed wiring board of at least one of the first slider part 1 and the second slider part 2. This is particularly useful in closed position, when the radiating element 8 is boxed in between the first slider part 1 and the second slider part 2.

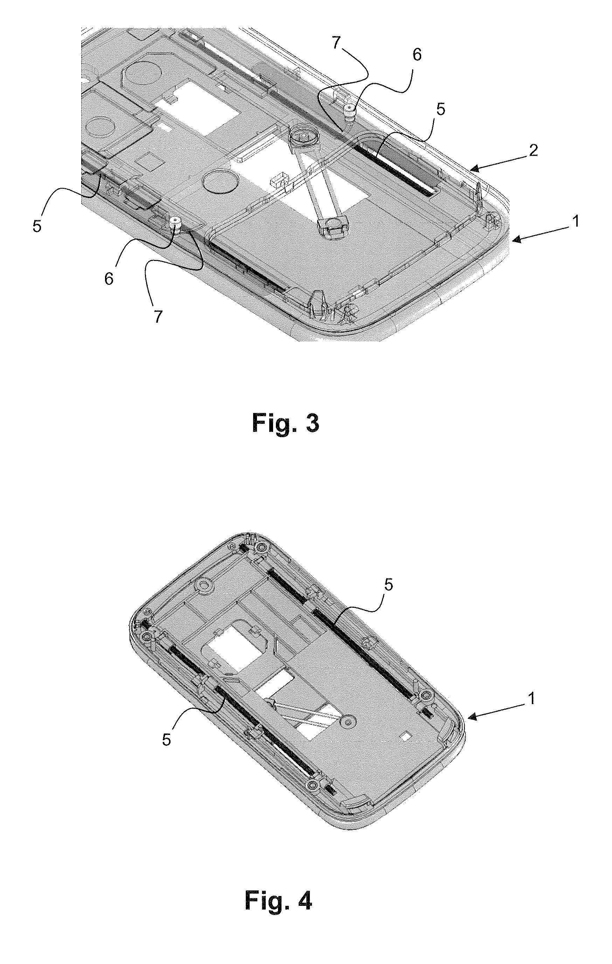

A portable radio communication device according to a second embodiment of the present invention will now be described with reference to Figs 3-4.

The portable radio communication device comprises a first slider part 1 and a second slider part 2 and an antenna device. The first slider part 1 has an inner side facing the second slider part 2 and an outer side facing away from the second slider part 2, and correspondingly the second slider part 2 has an inner side facing the first slider part 1 and an outer side facing away from the first slider part 1. The first slider part 1 and the second slider part 2 are configured to be slidable parallel to each other and to be temporarily fixed positioned in a first closed position and a second open position, wherein the inner side of the first slider part 1 is covered by the second slider part 2 and the inner side of the second slider part 2 is covered by the first slider part 1 in the closed position and the inner side of the first slider part 1 is partly covered by the second slider part 2 and the inner side of the second slider part 2 is partly covered by the first slider part 1 in the open position.

For e.g. a slider mobile phone the first slider part 1 comprises a display and possibly a key pad, whereas the second slider part 2 comprises RF circuitry, processing capabilities, a possible camera, and alternatively the key pad.

The antenna device comprises a radiating element 5 which is a piece of the portable radio communication device also having another function for the portable radio communication device. The portable radio communication device comprises at least one slider rail 5, usually two parallel slider rails 5, along which the first slider part 1 and the second slider part 2 slide between the open and closed positions, which slider rail 5 is also the radiating element 5. When the portable radio communication device comprises more than one slider rail 5, all slider rails could be used as radiating elements 5, for separate frequency bands, for diversity function, or a combination of separate frequency bands and diversity function.

A feeding point for the antenna device is preferably positioned on the slider rail 5 to match the radiating element 5. By either positioning the feeding point on the slider rail 5 such that it is on a portion that is between the first and second slider parts 1 and 2 in the open position or by positioning the feeding point on the slider rail 5 such that it is on a portion that is not between the first and second slider parts 1 and 2 when the first and second slider parts 1 and 2 are in the open position the antenna device can be optimized for either open position or closed position of the portable radio communication device.

By preferably connecting the feeding point to a feed 6 through a sliding spring loaded contact a simple connection is achieved. By alternatively connecting the feeding point to a feed 6 through a flexible cable 7 connection, the same electronic length of the radiating element 5 is maintained both in the open and in the closed position.

Further, matching, as well as tuning to some degree, of the radiating element can be adjusted by providing more than one feed point to the slider rail, and the electronic length of the radiating element could also be adjusted by providing multiple grounding points to the slider rail.

The radiating element is preferably configured to parasitically couple to a printed wiring board of at least one of the first slider part and the second slider part, to boost antenna characteristics, particularly in the closed position.

A portable radio communication device according to a third embodiment of the present invention will now be described. The third embodiment is similar to the first embodiment described above, apart from the following. The decorative plate is provided with a slot, for slot feeding a printed wiring board of the first slider part, and/or the second slider part, which thereby will function as a slot fed stacked patch antenna. Apart from the decorative plate, other conductive portions of the portable radio communication device are preferably alternatively, or additionally, utilized for slot feeding of the printed wiring boards.

An antenna device according to the first, second, and third embodiments of the present invention, respectively, as described above, can further be combined. When the portable radio communication device comprises a decorative plate and one or more slider rails, all such parts can be utilized as radiating elements, for separate frequency bands, for diversity function, or a combination of separate frequency bands and diversity function.

Further conductive features that can serve as an antenna is e.g. handset casing, battery, board level shielding boxes, logo plates, buttons, switches, speaker grilles, bezels, decorative trims, touch screen input pen, flat-panel speaker, decorative metal covers, logo plates, slider actuators, and slider back plates.

It will be obvious that the present invention may be varied in a plurality of ways. Such variations are not to be regarded as departure from the scope of the present invention as defined by the appended claims. All such variations as would be obvious for a person skilled in the art are intended to be included within the scope of the present invention as defined by the appended claims.

## Claims

1. A portable radio communication device, comprising a first slider part (1) and a second slider part (2) and an antenna device, wherein said first slider part (1) has an inner side facing said second slider part (2) and an outer side facing away from said second slider part (2), said second slider part (2) has an inner side facing said first slider part (1) and an outer side facing away from said first slider part (1), and said first slider part (1) and said second slider part (2) are configured to be slidable parallel to each other and to be temporarily fixed positioned in a first closed position and a second open position, wherein said inner side of said first slider part (1) is covered by said second slider part (2) and said inner side of said second slider part (2) is covered by said first slider part (1) in said closed position and said inner side of said first slider part (1) is partly covered by said second slider part (1) and said inner side of said second slider part (2) is partly covered by said first slider part (1) in said open position, **characterized in that** said antenna device comprises a radiating element (5; 8) which is a piece of said portable radio communication device also having another function for said portable radio communication device.

2. The portable radio communication device as claimed in claim 1, wherein at least one of said first slider part (1) and said second slider part (2) comprises a decorative plate (8) covering a major portion of said inner side that is revealed when said first slider part (1) and said second slider part (2) are in said open position, which decorative plate also is said radiating element (8).

3. The portable radio communication device as claimed in claim 2, wherein said radiating element (8) comprises an open ended slot (9) tuned to at least one predefined frequency band.

4. The portable radio communication device as claimed in claim 3, comprising a feeding point (10) arranged on a first side of said slot (9), and a grounding point (11) arranged on a second side of said slot (9) opposite said feeding point (10).

5. The portable radio communication device as claimed in claim 4, wherein said feeding and grounding points (10, 11) are arranged at a distance from the end of said slot (9), wherein said distance is predefined to match said radiating element (8).

6. The portable radio communication device as claimed in claim 1, comprising at least one slider rail (5), along which said first slider part (1) and said second slider part (2) slide between said open and closed positions, which slider rail is also said radiating element (5).

7. The portable radio communication device as claimed in claim 6, wherein said antenna device comprises a feeding point, wherein positioning thereof on said slider rail (5) is predefined to match said radiating element (5).

8. The portable radio communication device as claimed in claim 7, wherein said feeding point is fed through a sliding spring loaded contact.

9. The portable radio communication device as claimed in claim 7, wherein said feeding point is fed through a flexible cable (7) connection.

10. The portable radio communication device as claimed in any of claims 1-9, wherein said radiating element (5; 8) is configured to parasitically couple to a printed wiring board of at least one of said first slider part (1) and said second slider part (2).

11. An antenna device for a portable radio communication device, which portable radio communication device comprises a first slider part (1) and a second slider part (2), wherein said first slider part (1) has an inner side facing said second slider part (2) and an outer side facing away from said second slider part (2), said second slider part (2) has an inner side facing said first slider part (1) and an outer side facing away from said first slider part (1), and said first slider part (1) and said second slider part (2) are configured to be slidable parallel to each other and to be temporarily fixed positioned in a first closed position and a second open position, wherein said inner side of said first slider part (1) is covered by said second slider part (2) and said inner side of said second slider part (2) is covered by said first slider part (1) in said closed position and said inner side of said first slider part (1) is partly covered by said second slider part (2) and said inner side of said second slider part (2) is partly covered by said first slider part (1) in said open position, **characterized in that** said antenna device comprises a radiating element (5; 8) which is a piece of said portable radio communication device also having another function for said portable radio communication device.
